# EUROPEAN PATENT SPECIFICATION

(11) **EP 0 629 838 B1**
(45) Date of publication and mention of the grant of the patent: **18.08.1999**
(21) Application number: 94304178.0
(22) Date of filing: 09.06.1994
(51) Int. Cl.: G01B 17/00, G01D 5/48

(54) **An apparatus and a method for detecting the position of a laser beam**
Verfahren und Vorrichtung zur Detektierung der Position eines Laserstrahls
Procédé et appareil pour détecter la position d'un rayon laser

(30) Priority: 18.06.1993 GB 9312585
(43) Date of publication of application: 21.12.1994
(73) Proprietor: British Nuclear Fuels PLC, Risley Warrington Cheshire, WA3 6AS (GB)
(72) Inventor: Modern, Peter Julian; C/o British Nuclear Fuels pl, Preston PR4 0XJ (GB); O'Neill, William, c/o Liverpool University, Liverpool L69 3BY (GB); Sparkes, Martin Roy c/o Liverpool University, Liverpool L69 3BY (GB); Steen, William Maxwell, c/o Liverpool University, Liverpool L69 3BY (GB)
(74) Representative: McCormack, Derek James

(56) References cited:
- FR-A- 2 335 826
- GB-A- 2 158 942
- US-A- 4 067 015
- US-A- 4 200 921
- US-A- 4 543 486

## Description

The present invention relates to an apparatus and a method for detecting the position of a laser beam.

In systems employing laser beams it is desirable in some applications to be able to change the direction of the beam using one or more mirrors. In some cases it is necessary to be able to measure the position of the beam accurately relative to a datum point on the mirror.

Previously reported research has shown that acoustic waves are produced when a laser beam is incident upon a mirror employed to deflect the beam. These signals have been attributed to thermal absorption in a thin surface of the mirror. Owing to thermal expansion a pressure is exerted in the surrounding area. The thermal energy is deposited so rapidly by the beam that the adjacent material has no time to relax, and hence quench the acoustic wave. The laser beam thus acts as a source of elastic waves on the surface of the mirror.

It has been suggested in the prior art that the acoustic signal produced by a laser beam in a reflector may be used to detect characteristics of the beam such as beam power or beam size and position. For example, prior patent application GB 2158942A describes such an arrangement in which the acoustic signal is proposed to be picked up by one or a plurality of electromechanical transducers mounted on a beam reflector.

According to the present invention there is provided a method of detecting the spatial position of a laser beam relative to a body located in the path of the beam by detecting an acoustic signal produced by the beam in the said body, wherein the laser beam carries a power modulation signal and the body has a plurality of acoustic sensors for detecting the acoustic signal produced in the body by the laser beam, the method including detecting in the outputs of the acoustic sensors signals corresponding to the power modulation of the incident laser beam, detecting any difference in phase between the detected signals and using the differences in phase to detect the spatial position of the laser beam relative to a datum point on the body.

According to the present invention in a second aspect there is provided an apparatus for detecting the position of a laser beam relative to a body locatable in the path of the laser beam, including a laser having in use an output beam carrying a power modulation signal, a body locatable in the path of the laser beam the body having a plurality of acoustic sensors for detecting an acoustic signal produced by the laser beam in the body and a processor for processing the outputs of the acoustic sensors, the processor including means for sensing in the respective outputs signals corresponding to the power modulation of the output beam of the laser and a phase sensitive detector for detecting differences in phase between the detected signals whereby, in use, the differences in phase are used to detect the spatial position of the laser beam relative to a datum point on the body.

Desirably, there are at least three acoustic sensors whereby the spatial position of the laser beam may be detected in two dimensions relative to the said body.

The difference in phase between the signals detected by the acoustic sensors provides a measure of the spatial position of the laser beam relative to a datum point on the body. For example, if the datum point is at the centre of the body and the acoustic sensors are located equidistantly from the datum point then when the axis of the laser beam co-incides with the datum point the detected signals will be in-phase. There is a time delay between incidence of the beam on the body and reception of the corresponding acoustic signal at the acoustic sensors. The time delays are equal if the distances travelled by the acoustic signal to the respective acoustic sensors are equal. However, when the laser beam moves off-axis toward one or more of the acoustic sensors there will be a difference in delay of the acoustic signal reaching the respective sensors and this difference in delay produces a phase difference between the detected signals.

The modulation of the laser beam power is desirably at a frequency greater than 1 kHz. The modulation may be obtained by applying a suitable modulation waveform to the power applied to energise the laser from its power control unit or system. Alternatively, a natural fluctuation in the laser output may be employed. Such fluctuations occur at frequencies characteristic of the type of laser employed.

The laser may be a carbon dioxide laser or other gas laser, an excimer or a solid state laser eg Nd-YAG.

The said processor may include filter means adapted to filter the output of each acoustic sensor and a phase detector means adapted to compare the phase of each filtered output with a reference phase.

The said filter means may comprise a plurality of matched filters each associated with one of the acoustic sensors the matched filters in use having as reference signals inputs relating to the modulation of the laser output power. The reference signal may be supplied from a power control system controlling the power supply and modulation therein applied to the laser.

The said phase detector means may comprise a phase lock circuit of a known kind providing in use a dc signal which is a measure of the relative phase of its input. A plurality of phase lock circuits may be employed each associated with one of the said filters whereby it has an input the output of the corresponding filter.

The respective outputs of the phase lock circuits may be compared by a comparator device. The comparator device may comprise an analogue to digital converter for converting each output from the phase lock circuits into a digital value and a digital computer for detecting differences between the respective digital values, eg differences above a given threshold.

The said comparator device may be adapted to produce an error control signal which via a feedback loop and a servo-control mechanism adjusts the position of the mirror until the print of the laser beam on the mirror is such that the difference between the outputs of the phase lock circuits is substantially eliminated.

The acoustic sensors may for example be piezoelectric or other known transducers which can convert acoustic signals into electrical signals.

The present invention has particular applicability in uses in which a laser beam has to be transmitted from a laser source to a remote point of application. For example, the point of application may be in a building in which remote handling operations are carried out, eg for treatment of contaminated surfaces as described in Applicants' EP 0574564 (PCT/GB/9209404). In such uses the laser beam may be steered by a plurality of mirrors as aforesaid each having its own acoustic sensors and detection system providing control signals for adjusting the orientation of the mirror. For example, when the building in which the laser system is employed is the subject of a seismic disturbance or other vibration, the apparatus according to the present invention will allow automatic adjustment of the mirrors to keep the point of application of the laser beam the same.

Embodiments of the present invention will now be described by way of example with reference to the accompanying drawings, in which:
Figure 1 is a side view of a laser arranged to irradiate a beam position detection mirror;
Figure 2 is an end view in the direction 'X' of the detector mirror shown in Figure 1;
Figure 3 is a graph illustrating an idealised modulation wave form of the output power of the laser shown in Figure 1;
Figure 4 is a graph illustrating an alternative laser output idealised modulation waveform;
Figure 5 is a graph illustrating a further alternative laser output modulation waveform;
Figure 6 is a block circuit diagram showing a signal processing arrangement for signals produced by the acoustic detectors located on the detection mirror shown in Figure 1;
Figure 7 is a graph showing idealised signals detected by the acoustic detectors shown in Figure 1 when in-phase.
Figure 8 is a graph showing a phase difference in idealised signals detected by the acoustic detectors shown in Figure 1.
Figure 9 is a graph of the acoustic frequency spectrum; and Figure 10 is a graph showing the shape of the acoustic waveform.

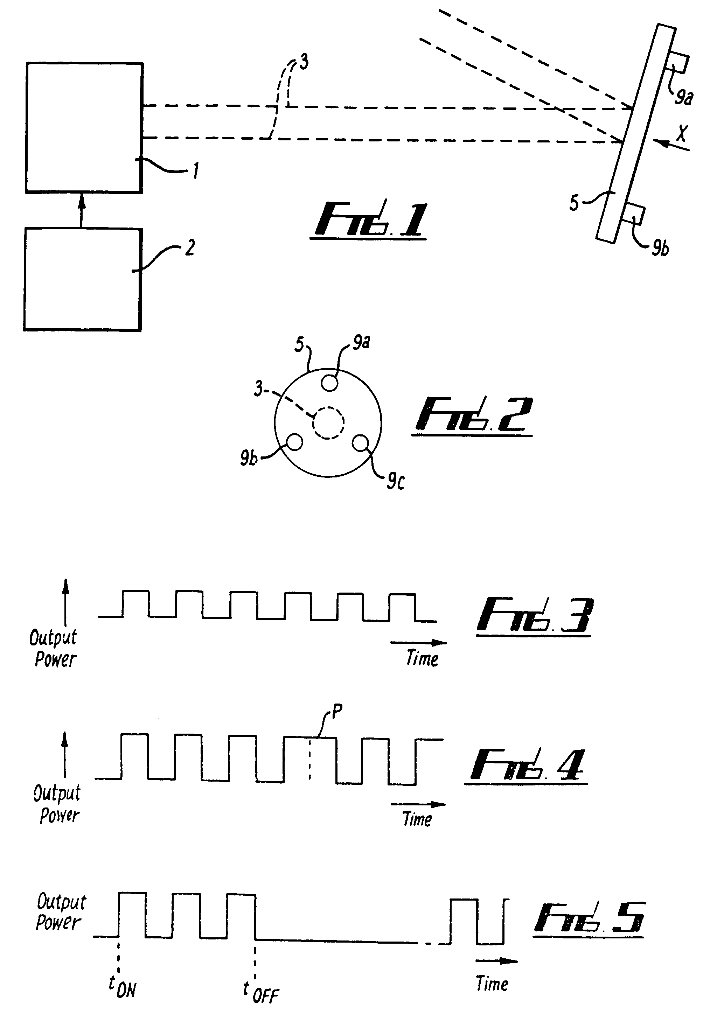

As shown in Figure 1, a laser 1 energised by a power control system 2 produces an output laser beam 3 which is incident on a detector mirror 5. The beam 3 on reflection by the mirror is deflected toward an application system not shown. In practice, the angle between the normal to the mirror 5 and the beam 3 may be very small whereby the beam 3 makes an approximately circular print on the mirror 5.

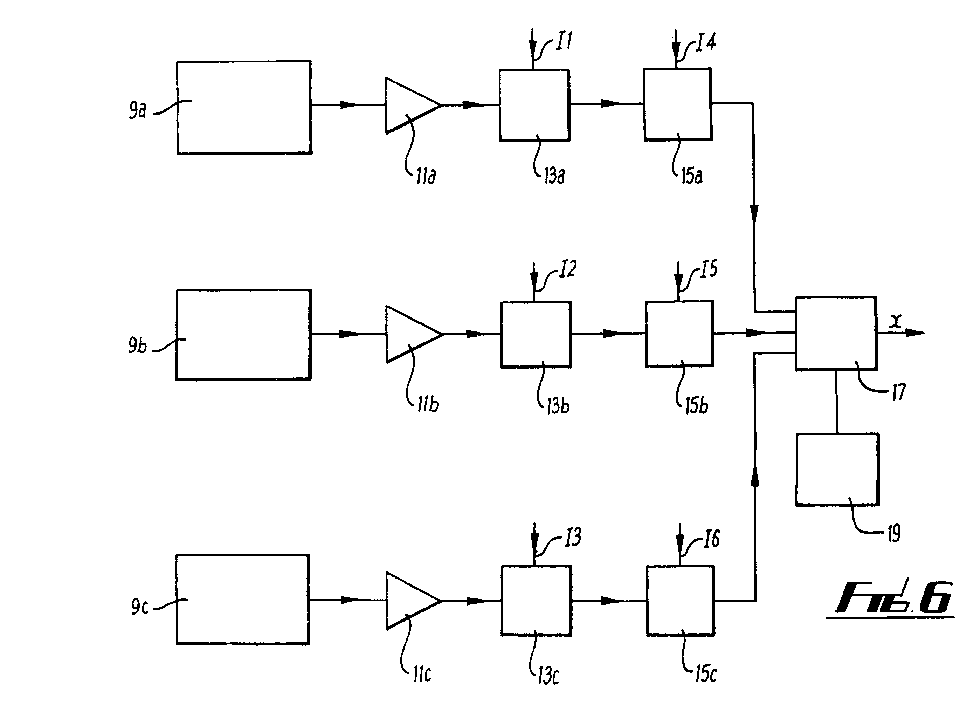

As shown in Figure 2, the mirror 5 has deposited on its rear surface (relative to incidence of the beam 3) three acoustic sensors 9a, 9b, 9c each of which is acoustically coupled to the rear surface of the mirror 3 by high vacuum grease and is independently clamped (by a clamp not shown). The rear surface of the mirror 3 on which the sensors 9a, 9b and 9c are located may optionally comprise the outside surface of a cooled water jacket provided at the rear of the mirror 3.

The sensors 9a, 9b and 9c may be wide band acoustic sensors which comprise finely tuned piezoelectric crystals. Each of the sensors 9a, 9b, 9c picks up the acoustic signal produced in the mirror 5 by the beam 3.

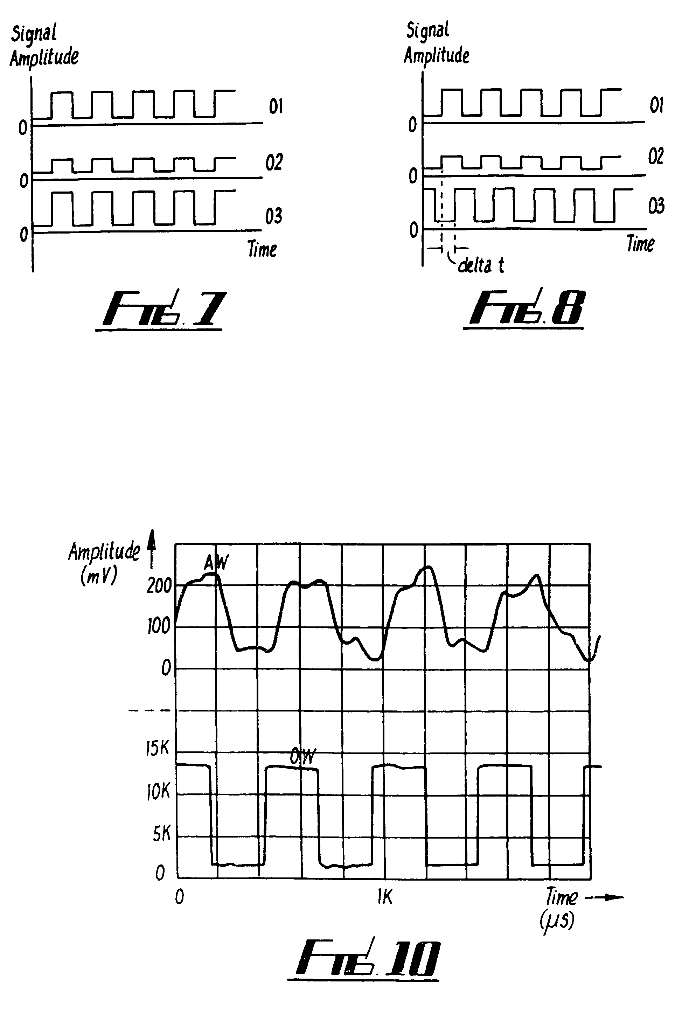

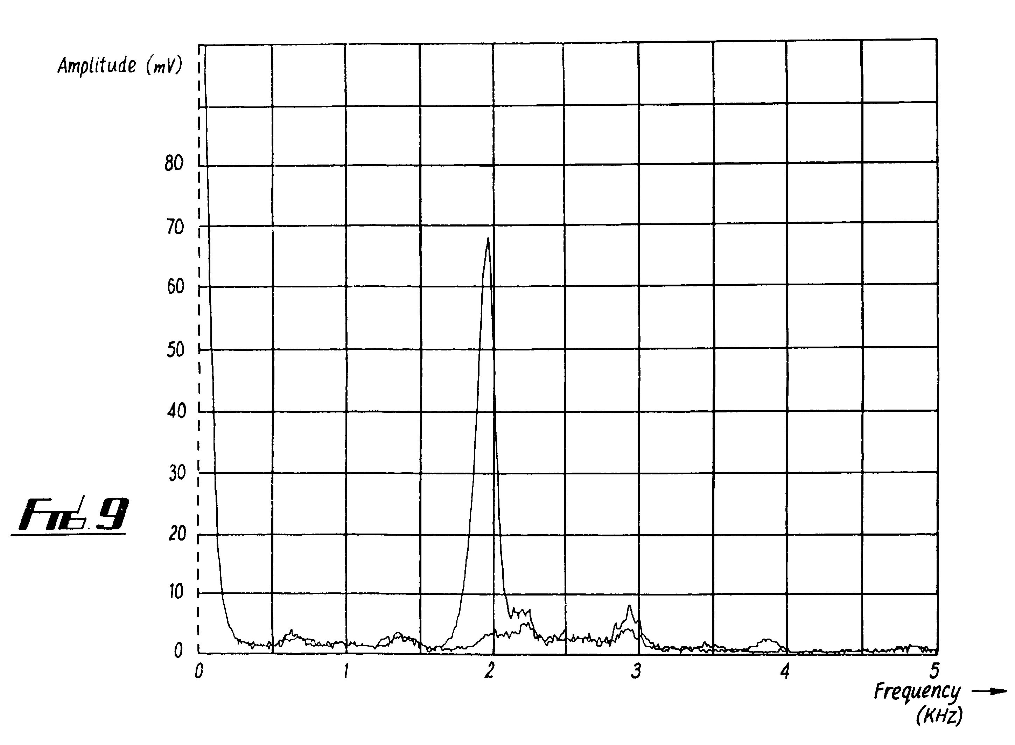

The laser 1 is controlled by the control system 2 by application of a waveform which varies according to a square wave modulation function. This produces a power output waveform comprising the beam 3 which in an idealised form is as illustrated in Figure 3. Alternatively, the beam power may be modulated as shown in idealised form in Figure 4 wherein part of the waveform carries a double pulse P or as shown in idealised form in Figure 5 wherein the modulation occurs only occasionally, eg 100 times per second, between times t_{ON} and t_{OFF}.

Figure 6 shows how the acoustic signals produced by the beam 3 are detected and processed. The output of the acoustic sensors 9a, 9b and 9c are fed respectively into amplifiers 11a, 11b and 11c and then into matched filters 13a, 13b, 13c having reference inputs I1, I2 and I3 comprising a common waveform obtained from a waveform generator incorporated within the power control system 2 (Figure 1). The outputs of the filters 13a, 13b and 13c are applied respectively to phase lock circuits 15a, 15b and 15c having reference inputs I4, I5 and I6 comprising a common reference waveform of known phase obtained from a clock incorporated within the control system 2 (Figure 1).

Figures 7 and 8 illustrate idealised outputs 01, 02 and 03 obtained from the sensors 9a, 9b and 9c for a waveform as shown in Figure 3 applied by the power control system 2 to the laser 1. If the beam 3 is incident on the mirror 5 equidistantly from the sensors 9a, 9b and 9c then, as shown in Figure 7, all of the outputs 01, 02 and 03 are in phase with the output waveform of the power control system 2. If the beam 3 is incident on the mirror 5 in a position which is nearer to the sensor 9c than to the sensors 9a and 9b then there is a phase difference 'delta t' as shown by dashed lines in Figure 8 between the phase of the output 03 which represents the signal detected by the sensor 9c and the outputs 01 and 02 representing signals detected by the sensors 9a, 9b which are by design arranged to be in turn in-phase with the output waveform of the power control circuit 2.

In practice, the signals provided as outputs by the acoustic sensors 9a, 9b and 9c are not idealised as shown in Figures 7 and 8 since there is a frequency spread in the output for a given input. Figure 9 illustrates the acoustic frequency spectrum obtained when a 100 per cent 1kW, 2kHz square wave modulation is applied to an Electrox laser the output beam 3 of which is detected by the sensor 9a. Figure 10 illustrates the shape of the acoustic waveform AW obtained for the same laser modulation. The laser modulation is obtained from the waveform OW shown in Figure 10 which is the output of the power control circuit 2. The outputs of the sensors 9a, 9b and 9c are cleaned by the matched filters 13a, 13b and 13c to facilitate phase detection in the phase lock circuits 15a, 15b and 15c respectively.

Each phase lock circuit 15a, 15b and 15c shown in Figure 6 produces a dc output voltage which is a measure of the relative phase of its input signal as determined by reference to the inputs I4, I5 and I6.

The circuits 15a, 15b and 15c are normalised with respect to one another so that given changes in output voltage represent the same given measured phase difference. When the respective outputs of the circuits 15a, 15b and 15c are equal, therefore, there is known to be no phase difference between the signals detected by the three sensors 9a, 9b and 9c and the beam 3 is therefore positioned equidistantly between the sensors 9a, 9b and 9c. If one of the outputs of the circuits 15a, 15b and 15c differs from its expected value this indicates that relative adjustment is needed between the position of the beam 3 and the mirror 5. The outputs of the circuits 15a, 15b and 15c are applied to a comparator 17 which detects differences above a threshold in magnitude between its three inputs. The comparator 17 may comprise an analogue-to-digital converter which converts the input voltages into digital values and a digital computer which carries out the comparison procedure. The result of the comparison procedure by the comparator 17 may be displayed on a visual display 19, eg oscilloscope, and an error control signal output x generated by the comparator 17 may be applied in a known way via a servo-loop and servo-control mechanism (not shown) to adjust mirror 5 relative to the position of the beam 3 so that the outputs of the circuits 15a, 15b and 15c are equal.

The waveforms shown in Figures 4 and 5 are examples of alternative waveforms which may be employed to simplify the phase locking procedure.

## Claims

1. A method of detecting the spatial position of a laser beam (3) relative to a body (5) located in the path of the laser beam (3) by detecting an acoustic signal produced by the beam (3) in the body (5), wherein the laser beam (3) carries a power modulation signal and the body (5) has a plurality of acoustic sensors (9a, 9b, 9c) for detecting the acoustic signal produced in the body (5) by the laser beam (3), the method including detecting in the outputs of the acoustic sensors (9a, 9b, 9c) signals corresponding to the power modulation of the incident laser beam (3),
characterised in that the method further includes detecting any difference in phase between the detected signals and using the differences in phase to detect the spatial position of the laser beam relative to a datum point on the body.

2. A method as in Claim 1 and wherein there are at least three acoustic sensors (9a, 9b, 9c) whereby the spatial position of the laser beam (3) may be detected in two dimensions.

3. A method as in Claim 1 or Claim 2 and wherein the modulation of the laser beam power is at a frequency greater than 1 kHz.

4. A method as in Claim 3 and wherein the modulation is obtained by applying a suitable modulation waveform to the power applied to energise the laser from its power control unit or system (2).

5. A method as in Claim 3 and wherein a natural fluctuation in the laser output is employed as the laser beam power modulation, the fluctuation occurring at a frequency characteristic of the type of laser employed.

6. A method as in any of claims 1 to 5 and wherein any difference in phase between the detected signals is used in a feedback loop to adjust the position of the beam.

7. A method as in claim 6 and wherein the position of the beam is adjusted until the difference in phase between detected signals is eliminated.

8. An apparatus for detecting the position of a laser beam (3) relative to a body (5) located in the path of the laser beam (3) the apparatus including a laser (1) having in use an output beam (3) carrying a power modulation signal, a body (5) locatable in the path of the laser beam (3) the body (5) having a plurality of acoustic sensors (9a, 9b, 9c) for detecting an acoustic signal produced by the laser beam (3) in the body (5) and a processor for processing the outputs of the acoustic sensors (9a, 9b, 9c), the processor including means for sensing in the respective outputs signals corresponding to the power modulation of the output beam of the laser (3), characterised in that the processor further includes a phase sensitive detector (15a, 15b, 15c) for detecting differences in phase between the detected signals whereby, in use, the differences in phase are used to detect the spatial position of the laser beam relative to a datum point on the body (5).

9. Apparatus as in Claim 8 and wherein the said processor includes filter means (13a, 13b, 13c) adapted to filter the output of each acoustic sensor (9a, 9b, 9c) and a phase detector means (15a, 15b, 15c) adapted to compare the phase of each filtered output with a reference phase.

10. Apparatus as in Claim 9 and wherein the said filter means (13a, 13b, 13c) comprises a plurality of matched filters (13a, 13b, 13c) each associated with one of the acoustic sensors (9a, 9b, 9c) the matched filters (13a, 13b, 13c) in use having as reference signals inputs (I1, I2, I3) relating to the modulation of the output power of the laser.

11. Apparatus as in Claim 8, 9 or 10 and wherein the said phase detector means comprises a phase lock circuit (15a, 15b, 15c) providing in use a dc signal which is a measure of the relative phase of its input.

12. Apparatus as in Claim 11 insofar as dependent on Claim 10 and wherein a plurality of phase lock circuits (15a, 15b, 15c) are included, each associated with one of the said filters (13a, 13b, 13c) whereby it has an input the output of the corresponding filter.

13. Apparatus as in Claim 11 or 12 and wherein the respective outputs of the phase lock circuits (15a, 15b, 15c) are arranged so as to be compared by a comparator device (17).

14. Apparatus as in Claim 13 and wherein the comparator (17) device comprises an analogue-to-digital converter for converting each output from the phase lock circuits into a digital value and a digital computer for detecting differences between the respective digital values above a given threshold.

15. Apparatus as in Claim 13 or Claim 14 and wherein the said comparator device (17) is adapted to produce an error control signal and the apparatus includes a feedback loop and a servo-control mechanism connected thereto to adjust by the error control signal the position of the laser beam (3) until the difference between the outputs of the phase lock circuits (15a, 15b, 15c) is substantially eliminated.

16. Apparatus as in Claim 8 and wherein the acoustic sensors (9a, 9b, 9c) are piezoelectric or other transducers which can convert acoustic signals into electrical signals.

## Patentansprüche

1. Verfahren zur Bestimmung der räumlichen Position eines Laserstrahls (3) relativ zu einem sich in dem Weg des Strahles (3) befindlichen Gegenstand (5), indem ein von dem Strahl (3) in besagtem Gegenstand (5) erzeugtes akustisches Signal festgestellt bzw. empfangen wird, worin der Laserstrahl (3) ein Leistungsmodulationssignal trägt und der Gegenstand (5) mehrere akustische Sensoren (9a, 9b, 9c) zum Empfang bzw. zur Feststellung des von dem Laserstrahl (3) in dem Gegenstand (5) erzeugten akustischen Signals aufweist, wobei das Verfahren beinhaltet, daß in den Ausgängen der akustischen Sensoren (9a, 9b, 9c) Signale empfangen werden, die mit der Leistungsmodulation des einfallenden Laserstrahles (3) korrespondieren, dadurch gekennzeichnet, daß das Verfahren weiterhin beinhaltet, daß Phasendifferenzen zwischen den empfangenen Signalen festgestellt werden, und daß diese Phasendifferenzen dazu verwendet werden, die räumliche Position des Laserstrahls (3) relativ zu einem Referenzpunkt auf dem Gegenstand zu bestimmen.

2. Verfahren nach Anspruch 1, und worin wenigstens drei akustische Sensoren (9a, 9b, 9c) verwendet werden, wodurch die räumliche Position des Laserstrahls (3) in zwei Dimensionen festgestellt werden kann.

3. Verfahren nach Anspruch 1 oder Anspruch 2, und worin die Modulation der Laserstrahlleistung mit einer Frequenz von mehr als 1kHz stattfindet.

4. Verfahren nach Anspruch 3, und worin die Modulation erhalten wird, indem eine geeignete Modulationswellenform an die zur Aufladung des Lasers angelegte Leistung mithilfe seiner Leistungs- bzw. Stromversorgungssteuerungsvorrichtung (2) angelegt wird.

5. Verfahren nach Anspruch 3, und worin eine natürliche Fluktuation in der Laserausgangsleistung als Laserstrahlleistungsmodulation verwendet wird, wobei die auftretende Fluktuation bei einer für die Art des verwendeten Lasers charakteristischen Frequenz auftritt.

6. Verfahren nach einem der Ansprüche 1 bis 5, und worin jegliche Phasendifferenz zwischen den empfangenen bzw. festgestellten Signalen in einem phasenverriegelten Schaltkreis dazu verwendet wird, um die Position des Strahles einzustellen.

7. Verfahren nach Anspruch 6, und worin die Position des Strahles eingestellt wird, bis die Phasendifferenz zwischen den empfangenen Signalen eliminiert ist.

8. Vorrichtung zur Bestimmung der Position eines Laserstrahls (3) relativ zu einem sich in dem Weg des Laserstrahls (3) befindlichen Gegenstand (5), wobei besagte Vorrichtung einen Laser (1) beinhaltet, welcher im Betrieb einen Ausgangsstrahl (3) aufweist, der ein Leistungsmodulationssignal trägt, welche weiterhin einen sich in dem Weg des Laserstrahls (3) positionierbaren Gegenstand (5) aufweist, wobei besagter Gegenstand (5) mehrere akustische Sensoren (9a, 9b, 9c) zum Empfang bzw. Feststellen des von dem Laserstrahl (3) in dem Gegenstand (5) erzeugten akustischen Signals aufweist, und einen Prozessor zur Verarbeitung der Ausgänge der akustischen Sensoren (9a, 9b, 9c), wobei der Prozessor eine Vorrichtung zur Bestimmung von mit der Leistungsmodulation des ausgehenden Laserstrahls (3) korrespondieren Signalen aufweist, dadurch gekennzeichnet, daß besagter Prozessor weiterhin einen phasenempfindlichen Detektor (15a, 15b, 15c) zur Bestimmung von Phasendifferenzen zwischen den empfangenen Signalen aufweist, wodurch, während des Betriebs, Phasendifferenzen dazu verwendet werden, um die räumliche Position des Laserstrahls (3) relativ zu einem Referenzpunkt auf dem Gegenstand (5) zu bestimmen.

9. Vorrichtung nach Anspruch 8, und worin besagter Prozessor Filtervorrichtungen (13a, 13b, 13c) beinhaltet, welche dazu ausgelegt sind, den Ausgang jedes akustischen Sensors (9a, 9b, 9c) zu filtern, und eine Phasenbestimmungsvorrichtung (15a, 15b, 15c), welche dazu ausgelegt ist, die Phase jedes gefilterten Ausgangs mit einer Referenzphase zu vergleichen.

10. Vorrichtung nach Anspruch 9, und worin besagte Filtervorrichtungen (13a, 13b, 13c) eine Mehrzahl von signalabgestimmten Filtern (13a, 13b, 13c) aufweisen, welche jeweils einem der akustischen Sensoren (9a, 9b, 9c) zugeordnet sind, wobei die signalabgestimmten Filter (13a, 13b, 13c) im Betrieb Referenzsignaleingänge (I1, I2, I3) aufweisen, welche von der Modulation der Ausgangsleistung des Lasers abhängen.

11. Vorrichtung nach Anspruch 8, 9 oder 10, und worin besagte Phasenbestimmungsvorrichtung einen phasenverriegelten Schaltkreis (15a, 15b, 15c) aufweist, der im Betrieb ein Gleichspannungssignal liefert, welches ein Maß der relativen Phase seines Eingangs ist.

12. Vorrichtung nach Anspruch 11, insoweit dieser abhängig ist von Anspruch 10, und worin eine Mehrzahl von phasenverriegelten Schaltkreisen (15a, 15b. 15c) beinhaltet sind, welche jeweils einem der Filter (13a, 13b, 13c) zugeordnet sind, wodurch als Eingang der Ausgang des entsprechenden Filters verwendet wird.

13. Vorrichtung nach Anspruch 11 oder 12, und worin die jeweiligen Ausgänge der phasenverriegelten Schaltkreise (15a, 15b, 15c) so angeordnet sind, daß sie von der Vergleichervorrichtung (17) verglichen werden können.

14. Vorrichtung nach Anspruch 13, und worin die Vergleichervorrichtung (17) einen Analog-Zu-Digital-Wandler zur Umwandlung jedes Ausgangs von den phasenverriegelten Schaltkreisen in einen digitalen Wert und einen digitalen Rechner zur Bestimmung der Differenzen zwischen den digitalen Werten über einer bestimmten Schwelle beinhaltet.

15. Vorrichtung nach Anspruch 13 oder Anspruch 14, und worin besagte Vergleichsvorrichtung (17) dazu ausgelegt ist, ein Fehlerkontroll- bzw. steuersignal zu liefern und die Vorrichtung eine Rückkopplungsschleife und einen damit verbundenen Servosteuerungsmechanismus beinhaltet, um mithilfe des Fehlersteuerungssignals die Position des Laserstrahles (3) einzustellen, bis die Differenz zwischen den Ausgängen der phasenverriegelten Schaltkreise (15a, 15b, 15c) im wesentlichen eliminiert ist.

16. Vorrichtung nach Anspruch 8, und worin die akustischen Sensoren (9a, 9b, 9c) piezoelektrische oder andere Wandler sind, welche akustische in elektrische Signale umwandeln können.

## Revendications

1. Procédé de détection de la position dans l'espace d'un faisceau laser (3) par rapport à un corps (5) placé sur le trajet du faisceau laser (3) par détection d'un signal acoustique produit par le faisceau (3) dans le corps (5), dans lequel le faisceau laser (3) transporte un signal de modulation de puissance et le corps (5) a plusieurs capteurs acoustiques (9a, 9b, 9c) destinés à détecter le signal acoustique produit dans le corps (5) par le faisceau laser (3), le procédé comprenant la détection, dans les signaux de sortie des capteurs acoustiques (9a, 9b, 9c), de signaux correspondant à la modulation de puissance du faisceau laser incident (3), caractérisé en ce que le procédé comprend en outre la détection de tout déphasage entre les signaux détectés, et l'utilisation du déphasage pour détecter la position dans l'espace du faisceau laser par rapport à un point de référence sur le corps.

2. Procédé selon la revendication 1, dans lequel trois capteurs acoustiques (9a, 9b, 9c) au moins sont présents, et la position dans l'espace du faisceau laser (3) peut être détectée suivant deux directions.

3. Procédé selon la revendication 1 ou 2, dans lequel la modulation de puissance du faisceau laser est à une fréquence supérieure à 1 kHz.

4. Procédé selon la revendication 3, dans lequel la modulation est obtenue par application d'une forme d'onde convenable de modulation à la puissance appliquée pour l'excitation du laser par son système ou son unité de commande d'alimentation (2).

5. Procédé selon la revendication 3, dans lequel une fluctuation naturelle du signal de sortie du laser est utilisée comme modulation de puissance du faisceau laser, la fluctuation se produisant à une fréquence caractéristique du type de laser utilisé.

6. Procédé selon l'une quelconque des revendications 1 à 5, dans lequel toute différence de phase entre les signaux détectés est utilisée dans une boucle de réaction pour ajuster la position du faisceau.

7. Procédé selon la revendication 6, dans lequel la position du faisceau est ajustée jusqu'à ce que la différence de phase entre les signaux détectés soit éliminée.

8. Appareil de détection de la position d'un faisceau laser (3) par rapport à un corps (5) placé sur le trajet du faisceau laser (3), l'appareil comprenant un laser (1) qui, pendant l'utilisation, comporte un faisceau de sortie (3) qui transporte un signal de modulation de puissance, un corps (5) qui peut être placé sur le trajet du faisceau laser (3), le corps (5) ayant plusieurs capteurs acoustiques (9a, 9b, 9c) destinés à détecter un signal acoustique produit par le faisceau laser (3) dans le corps (5), et un processeur destiné à traiter les signaux de sortie des capteurs acoustiques (9a, 9b, 9c), le processeur comprenant un dispositif de détection des signaux respectifs de sortie correspondant à la modulation de puissance du faisceau de sortie du laser (3), caractérisé en ce que le processeur comporte en outre un détecteur sensible au déphasage (15a, 15b, 15c) et destiné à détecter les déphasages entre les signaux détectés si bien que, pendant l'utilisation, les déphasages sont utilisés pour la détection de la position dans l'espace du faisceau laser par rapport à un point de référence sur le corps (5).

9. Appareil selon la revendication 8, dans lequel le processeur comprend des dispositifs de filtrage (13a, 13b, 13c) destinés à filtrer le signal de sortie de chaque capteur acoustique (9a, 9b, 9c) et un détecteur de déphasage (15a, 15b, 15c) destiné à comparer les phases de chacun des signaux filtrés à une phase de référence.

10. Appareil selon la revendication 9, dans lequel les dispositifs de filtrage (13a, 13b, 13c) comportent plusieurs filtres accordés (13a, 13b, 13c) associés chacun à l'un des capteurs acoustiques (9a, 9b, 9c), les filtres accordés (13a, 13b, 13c) ayant, pendant l'utilisation, comme signaux de référence, des signaux d'entrée (Il, I2, I3) correspondant à la modulation de la puissance de sortie du laser.

11. Appareil selon la revendication 8, 9 ou 10, dans lequel le détecteur de déphasage comprend un circuit de verrouillage de phase (15a, 15b, 15c) qui, pendant l'utilisation, donne un signal continu de sortie qui est une mesure du déphasage à son entrée.

12. Appareil selon la revendication 11 lorsqu'elle dépend de la revendication 10, dans lequel plusieurs circuits de verrouillage de phase (15a, 15b, 15c) sont incorporés et associés chacun à l'un des filtres (13a, 13b, 13c) si bien qu'il reçoit à une entrée le signal de sortie du filtre correspondant.

13. Appareil selon la revendication 11 ou 12, dans lequel les signaux respectifs de sortie des circuits de verrouillage de phase (15a, 15b, 15c) sont disposés afin qu'ils soient comparés par un dispositif comparateur (17).

14. Appareil selon la revendication 13, dans lequel le dispositif comparateur (17) comporte un convertisseur analogique-numérique destiné à transformer chaque signal de sortie des circuits de verrouillage de phase en une valeur numérique et un ordinateur destiné à détecter les différences entre les valeurs numériques respectives au-delà d'un seuil déterminé.

15. Appareil selon la revendication 13 ou 14, dans lequel le dispositif comparateur (17) est destiné à produire un signal de commande d'erreur, et l'appareil comprend une boucle à réaction et un mécanisme de commande asservie qui lui est connecté pour l'ajustement, par le signal de commande d'erreur, de la position du faisceau laser (3) jusqu'à ce que la différence entre les signaux de sortie des circuits de verrouillage de phase (15a, 15b, 15c) soit pratiquement éliminée.

16. Appareil selon la revendication 8, dans lequel les capteurs acoustiques (9a, 9b, 9c) sont des transducteurs piézoélectriques ou autres qui peuvent transformer des signaux acoustiques en signaux électriques.
